# EUROPÄISCHE PATENTSCHRIFT

(11) **EP 2 033 853 B1**
(45) Veröffentlichungstag und Bekanntmachung des Hinweises auf die Patenterteilung: **20.01.2010**
(21) Anmeldenummer: 07017688.8
(22) Anmeldetag: 10.09.2007
(51) Int. Cl.: B60R 21/26

(54) **Luftsackanordnung für Fahrzeuge**
Airbag assembly for vehicles
Ensemble pour sac gonflable de véhicule automobile

(43) Veröffentlichungstag der Anmeldung: 11.03.2009
(73) Patentinhaber: Delphi Technologies, Inc., Troy, Michigan 48007 (US)
(72) Erfinder: Guthke, Detlev, 58089 Hagen (DE); Maiwald, Helmut, 51515 Kürten (DE); Meyenbrock, Ludger, 42109 Wuppertal (DE)
(74) Vertreter: Denton, Michael John

(56) Entgegenhaltungen:
- DE-A1- 19 629 541
- US-A1- 2004 183 282
- US-A1- 2005 173 902

## Beschreibung

Die Erfindung betrifft eine Luftsackanordnung für Kraftfahrzeuge mit zumindest einem aufblasbaren Luftsack, wenigstens einem Gasgenerator zum Aufblasen des Luftsacks, wobei der Gasgenerator zumindest im am Fahrzeug montierten Zustand entfernt von dem Luftsack angeordnet ist, und zumindest einer, insbesondere schlauchartigen, Gasleitung, die den Gasgenerator mit dem Luftsack verbindet und über die der Luftsack aufblasbar ist, wobei die Gasleitung derart, insbesondere flexibel, biegsam und/oder weich, ausgebildet ist, dass sie unter dem Einfluss von mittels des Gasgenerators freigegebenen, durch sie hindurchströmenden Gases aus einer Montagekonfiguration in eine Aufblaskonfiguration mit gegenüber der Montagekonfiguration vergrößertem Strömungsquerschnitt gelangen kann.

Es ist bekannt, beispielsweise so genannte Roof-Rail-Airbags über flexible Gasleitungen zu befüllen. Die Gasleitungen sind in der Lage, die Entfernung zwischen einem zum Aufblasen des Luftsacks dienenden Gasgenerator und dem Luftsack zu überbrücken und befinden sich folglich zumindest teilweise außerhalb des Luftsacks. Eine solche Luftsackanordnung ist beispielsweise aus dem US 2004/0183282 A1 bekannt.

Bei der Montage einer derartigen Luftsackanordnung muss die Gasleitung innerhalb des Fahrzeugs verlegt werden. Die Verlegung der Gasleitung kann beispielsweise zwischen Karosseriedach und dazugehöriger Innenverkleidung erfolgen. Bislang ist man bestrebt, die Gasleitung möglichst durchgehend geradlinig zu verlegen, um zu vermeiden, dass die Gasleitung "um die Ecke" geführt werden muss, und zwar insbesondere vor dem Hintergrund, dass die Gasleitungen in der Praxis meist in einer flachen Konfiguration am Fahrzeug montiert werden, um eine möglichst geringe Einbauhöhe zu erreichen. Man befürchtet, dass der Gasstrom beeinträchtigt und ein bestimmungsgemäßes Aufblasen des Luftsacks unmöglich oder zumindest erschwert ist, wenn ein derartiger Schlauch bei der Verlegung im Fahrzeug geknickt werden muss, um dem Schlauch eine Richtungsänderung zu verleihen. Die Vermeidung von Umlenkstellen beim Verlegen derartiger flexibler Gasleitungen bedeutet eine relativ geringe Flexibilität bei der Auslegung von Luftsackanordnungen, da die Möglichkeiten, die bei einer "Fernbefüllung" des Luftsacks mittels einer flexiblen Gasleitung prinzipiell gegeben sind, nicht voll ausgeschöpft werden können.

Aufgabe der Erfindung ist es, eine Luftsackanordnung der eingangs genannten Art zu schaffen, die ohne Beeinträchtigung des Aufblasverhaltens des Luftsacks in einem Fahrzeug auch dann verlegt werden kann, wenn im Fahrzeug ein nicht durchgehend geradliniger Verlauf der Gasleitung erforderlich ist.

Die Lösung dieser Aufgabe erfolgt durch die Merkmale des Anspruchs 1.

Erfindungsgemäß ist bei einer Luftsackanordnung der eingangs genannten Art vorgesehen, dass die Gasleitung in der Montagekonfiguration wenigstens eine Richtungsänderung zwischen einem einlaufenden Eintrittsabschnitt und einem abgehenden, mit dem Eintrittsabschnitt einen Umlenkwinkel einschließenden Austrittsabschnitt aufweist, und dass die Richtungsänderung durch eine im Verlauf der Gasleitung ausgebildete Umlenkfaltung der Gasleitung realisiert ist.

Es hat sich in einer für den Fachmann völlig überraschenden Weise herausgestellt, dass das Aufblasen eines Luftsacks nicht beeinträchtigt wird, wenn die den Luftsack mit dem Gasgenerator verbindende Gasleitung eine oder mehrere Umlenkfaltungen aufweist, die jeweils für eine Richtungsänderung im Verlauf der verlegten, d.h. nicht aufgeblasenen, Gasleitung sorgen, so dass von dem Prinzip einer "Fernbefüllung" des Luftsacks mittels einer den Luftsack mit einem entfernt angeordneten Gasgenerator verbindenden flexiblen Gasleitung auch dann Gebrauch gemacht werden kann, wenn im am Fahrzeug montierten Zustand zwischen dem Gasgenerator und dem Luftsack ein durchgehend geradliniges Verlegen der Gasleitung nicht möglich oder nicht erwünscht ist, sondern die Gasleitung einer oder mehreren Richtungsänderungen unterworfen werden muss oder soll.

Die Erfinder vermuten, dass das problemlose, das Aufblasen des Luftsacks in keiner Weise beeinträchtigende Entfalten der Umlenkfaltung beim Aufblasen des Luftsacks seine Ursache in den speziellen Gegebenheiten eines solchen Aufblasprozesses hat. Aufgrund des hoch-dynamischen Ablaufs eines solchen Aufblasvorgangs und der dabei wirksamen hohen Gasdrücke verhält sich die mit der Umlenkfaltung versehene Gasleitung anders als erwartet. Der anfangs von der Umlenkfaltung gebildete Strömungswiderstand führt nämlich gerade nicht zu einer "Selbsthemmung" der Gasleitung dahingehend, dass sich die Gasleitung im Bereich der Umlenkfaltung selbst verschließt oder abklemmt. Vielmehr hat sich gezeigt, dass ein unmittelbar nach Druckbeaufschlagung der Gasleitung auftretendes kurzzeitiges Öffnen der Umlenkfaltung ausreichend ist, um die Umlenkfaltung zu entfalten und den Luftsack in der bestimmungsgemäßen Weise aufzublasen. Die Umlenkfaltung führt zwar zu einer gewissen Zeitverzögerung beim Aufblasen des Luftsacks, die aber ohne weiteres toleriert werden kann.

Aufgrund der durch die Erfindung geschaffenen Möglichkeit, der Gasleitung zwischen dem Gasgenerator und dem Luftsack eine oder mehrere Richtungsänderungen zu verleihen, kann die erfindungsgemäße Luftsackanordnung an die jeweiligen Gegebenheiten im Fahrzeug angepasst werden, indem bei der Herstellung der Luftsackanordnung an den betreffenden Stellen der Gasleitung jeweils eine Umlenkfaltung ausgebildet wird. Erfindungsgemäß braucht in vorteilhafter Weise bei der Wahl des Ortes für den Gasgenerator bzw. bei der Wahl des Verlaufes der Gasleitung im Fahrzeug auf hierbei für die Gasleitung erforderliche Richtungsänderungen keine Rücksicht genommen zu werden. Luftsack und Gasgenerator können somit unabhängig davon, ob eine durchgehend geradlinige Verlegung der Gasleitung zwischen Gasgenerator und Luftsack am Fahrzeug möglich ist oder nicht, optimal positioniert werden, und auch der Verlauf der Gasleitung selbst kann ohne Rücksicht auf dabei eventuell erforderliche Richtungsänderungen optimiert werden.

In diesem Zusammenhang ist zu erwähnen, dass bei der erfindungsgemäßen Luftsackanordnung die Umlenkfaltung nicht erst bei der Montage der Luftsackanordnung im Fahrzeug ausgebildet wird, d.h. es ist nicht der Monteur des Fahrzeugherstellers, der die Gasleitung mit den Umlenkfaltungen versieht. Vielmehr wird in der Praxis gefordert, dass die Luftsackanordnung in einem vorkonfigurierten montagefertigen Zustand vorliegt, in welchem die Gasleitung bereits mit einer oder mehreren Umlenkfaltungen an den jeweils dafür vorgesehenen Stellen entsprechend der für das betreffende Fahrzeug geplanten Verlegung versehen ist. Die Umlenkfaltungen werden daher bereits bei der Herstellung der Luftsackanordnung in der Gasleitung ausgebildet.

Um sicherzustellen, dass die Umlenkfaltungen bis zur endgültigen Montage der Luftsackanordnung am Fahrzeug erhalten bleiben, können die Umlenkfaltungen fixiert werden. Dies kann beispielsweise durch Verkleben, durch Vernähen, durch Um- oder Einhüllen und/oder durch Zusammenhalten der Umlenkfaltung selbst und/oder des Eintrittsabschnitts und des Austrittsabschnitts nahe oder unmittelbar an der Umlenkfaltung vorzugsweise mittels wenigstens eines insbesondere klammer- oder manschettenartigen Fixierelementes erfolgen. Eine derartige Fixierung wird insbesondere derart ausgebildet, dass sie durch Beaufschlagen der Umlenkfaltung mittels des vom Gasgenerator freigegebenen Gases gelöst oder aufgebrochen werden kann, um ein bestimmungsgemäßes Entfalten der Umlenkfaltung zu ermöglichen.

Zum Um- bzw. Einhüllen der Umlenkfaltung kann diese z.B. mittels einer Hülle beispielsweise in Form einer Folie eng umschlossen werden. Die Hülle kann erforderlichenfalls perforiert werden, um ein Aufbrechen zu ermöglichen. Der Einsatz von separaten Fixierelementen, z.B. in Form von Klammern, Clipsen oder Manschetten, zum Zusammenhalten der Umlenkfaltung hat den Vorteil, dass diese Fixierelemente mit entsprechenden Gegenelementen, die am Fahrzeug angebracht sind, zusammenwirken können, um die Gasleitung beim Verlegen am Fahrzeug zu befestigen. Die Positionen der Gegenelemente am Fahrzeug können vorgegeben sein, so dass die Gasleitung gemäß dieser vorgegebenen Verlegung durch entsprechende Ausbildung einer oder mehrerer Umlenkfaltungen bereits bei der Herstellung der Luftsackanordnung mit dem exakt an das jeweilige Fahrzeug angepassten Verlauf versehen wird. Die Verlegung der Gasleitung und somit die Montage der Luftsackanordnung insgesamt wird hierdurch erheblich vereinfacht.

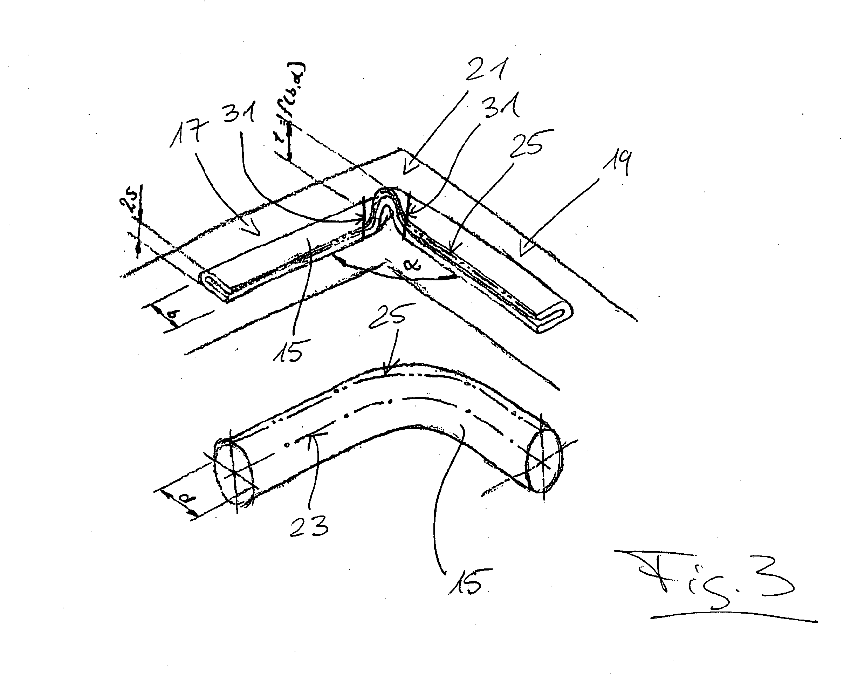

Die Fixierelemente können direkt an der Umlenkfaltung wirksam sein, d.h. die Umlenkfaltung selbst zusammenhalten. Alternativ oder zusätzlich können der Eintrittsabschnitt und/oder der Austrittsabschnitt mittels eines oder mehrerer Fixierelemente zusammengehalten werden, und zwar nahe oder unmittelbar an der Umlenkfaltung. Ein solches "Abklemmen" der Gasleitung am "Eingang" und/oder "Ausgang" der Umlenkfaltung bewirkt ebenfalls eine ausreichende Fixierung der Umlenkfaltung, die dann selbst nicht mehr fixiert oder in eine flache Montagekonfiguration gebracht zu werden braucht (vgl. Erläuterungen zum Ausführungsbeispiel gemäß Fig. 3).

Generell ist zu bemerken, dass der Begriff "Umlenkwinkel" primär in Bezug auf das Verlegen der Gasleitung zu verstehen ist, d.h. in Bezug auf die Montagekonfiguration der Gasleitung, denn durch das Aufblasen strebt die Gasleitung danach, in einen möglichst spannungsarmen Zustand zu gelangen, d.h. im Bereich der Umlenkfaltung sich zu strecken. Steht der verlegten Gasleitung am Fahrzeug Platz zur Verfügung, wird sie diese nutzen und beim Aufblasen eine von den Gegebenheiten abhängige Ideallinie einnehmen. Im Bereich der zuvor vorhandenen Umlenkfaltung kann also in der Aufblaskonfiguration eine beliebige, von dem Umlenkwinkel abweichende Richtungsänderung und insbesondere auch überhaupt keine Richtungsänderung mehr vorhanden sein. Dennoch ermöglicht die erfindungsgemäße Umlenkfaltung prinzipiell ein ordnungsgemäßes Aufblasen auch dann, wenn die Gasleitung aufgrund der Gegebenheiten am Fahrzeug dazu gezwungen ist, ihren durch die Umlenkfaltung vorgegebenen Umlenkwinkel, also ihren Verlege-Verlauf, im aufgeblasenen Zustand beizubehalten, d.h. die Umlenkfaltung setzt keinen Spielraum am Fahrzeug zwingend voraus. Allerdings wird man aufgrund von insbesondere durch Versuche der Erfinder gewonnenen Erkenntnissen bestrebt sein, die Gasleitung im Fahrzeug so zu verlegen, dass der Gasleitung beim Aufblasen zumindest etwas Platz zur Verfügung steht, wodurch sich der Umlenkwinkel verändern kann.

Weitere mögliche Ausgestaltungen der Erfindung sind auch in den abhängigen Ansprüchen, der Beschreibung sowie der Zeichnung angegeben.

In einem möglichen Ausführungsbeispiel ist vorgesehen, dass die Umlenkfaltung derart ausgebildet ist, dass die Umlenkfaltung durch das mittels des Gasgenerators freigegebene, durch die Gasleitung hindurch strömende Gas entfaltbar ist.

Des Weiteren kann vorgesehen sein, dass die Gasleitung in der Montagekonfiguration flach und die Umlenkfaltung ausgehend von der flachen Montagekonfiguration gebildet ist. Insbesondere ist vorgesehen, dass der Eintrittsabschnitt in einer flachen Montagekonfiguration in die Umlenkfaltung einläuft und der Austrittsabschnitt in einer flachen Montagekonfiguration von der Umlenkfaltung abgeht.

In einem weiteren Ausführungsbeispiel der Erfindung weist die Umlenkfaltung eine Mehrzahl von zumindest bereichsweise übereinanderliegenden flachen Leitungsabschnitten auf. Die Anzahl der übereinanderliegenden Leitungsabschnitte beträgt insbesondere zwei, drei oder vier.

Hier handelt es sich also bei der Umlenkfaltung nicht um eine wie auch immer geartete, unregelmäßige oder "chaotische" Faltung, sondern um eine geordnete Faltung, bei der das aufgrund der Richtungsänderung vorhandene "überschüssige" Material der Gasleitung so in Falten gelegt wird, dass die Umlenkfaltung eine flache Montagekonfiguration aus einer Mehrzahl von übereinander liegenden flachen Leitungsabschnitten aufweist.

In der flachen Montagekonfiguration braucht die Gasleitung erfindungsgemäß nicht zwingend zweilagig zu sein, also lediglich eine einzige Höheneinheit aufzuweisen. So ist es gemäß einer Weiterbildung der Erfindung beispielsweise möglich, dass der Eintrittsabschnitt und/oder der Austrittsabschnitt der Gasleitung zumindest im Bereich der Umlenkfaltung selbst gefaltet sind/ist. Diese Eigenfaltung des Eintrittsabschnitts und/oder des Austrittsabschnitts kann beispielsweise unter Halbierung der Breite im Querschnitt U-förmig sein. Die Dicke des Eintrittsabschnitts bzw. des Austrittsabschnitts beträgt aufgrund dieser Eigenfaltung dann somit zwei Höheneinheiten. Es können mehrere Eigenfaltungen vorgesehen sein, so dass sich die ursprüngliche Breite der Gasleitung um mehr als die Hälfte, z.B. auf ein Viertel oder ein Achtel, reduziert.

Es wurde gefunden, dass in Abhängigkeit von der Art und Weise der Ausbildung der Umlenkfaltung die Gasleitung in der Aufblaskonfiguration - also nach dem Entfalten der Umlenkfaltung durch das mittels des Gasgenerators freigegebene, durch die Gasleitung hindurchströmende Gas - um die Mittelachse der Gasleitung entweder verdreht, also tordiert ist, oder keine derartige Verdrehung aufweist. Dementsprechend ist in weiteren Ausführungen der Erfindung die Umlenkfaltung derart ausgebildet, dass die Gasleitung in der Aufblaskonfiguration entweder tordiert oder untordiert ist.

Dabei hat sich gezeigt, dass - wiederum in Abhängigkeit von der Art und Weise der Ausbildung der Umlenkfaltung - eine Torsion um entweder 90° oder 180° erzielt wird. Wenn die Gegebenheiten am Fahrzeug es zulassen, verteilt sich diese Verdrehung über die Länge der Gasleitung, insbesondere über deren gesamte Länge zwischen Gasgenerator und Luftsack.

Gemäß einer weiteren Ausführungsform der Erfindung umfasst die Gasleitung ein Gewebe, insbesondere ein aus Kunststofffäden oder Kunststofffasem hergestelltes Gewebe. Verwendet wird beispielsweise ein Gewebe aus PA 6.6 mit 470 dTex. Ein derartiges Gewebe kann bekanntermaßen insbesondere auch für die Hülle des Luftsacks selbst verwendet werden. Alternativ kann die Gasleitung von einer Folie gebildet werden.

Dabei kann die Gasleitung eine auf das Gewebe aufgebrachte Beschichtung aufweisen, wobei die Beschichtung auf der Innenseite und/oder auf der Außenseite des Gewebes vorgesehen ist.

Für die Beschichtung kann das gleiche oder ein gleichartiges Material vorgesehen sein wie für ein Klebemittel, das zum gasdichten Verschließen der Gasleitung bei deren Herstellung vorgesehen ist. Bei diesem Material handelt es sich insbesondere um ein Silikonmaterial. Silikon wird bekanntermaßen zum Beschichten des für die Herstellung von Luftsäcken verwendeten Gewebes und auch als Klebemittel zur Herstellung von an Luftsäcken vorgesehenen Verklebungen eingesetzt.

Die Erfindung wird im Folgenden beispielhaft unter Bezugnahme auf die Zeichnung beschrieben. Es zeigen:

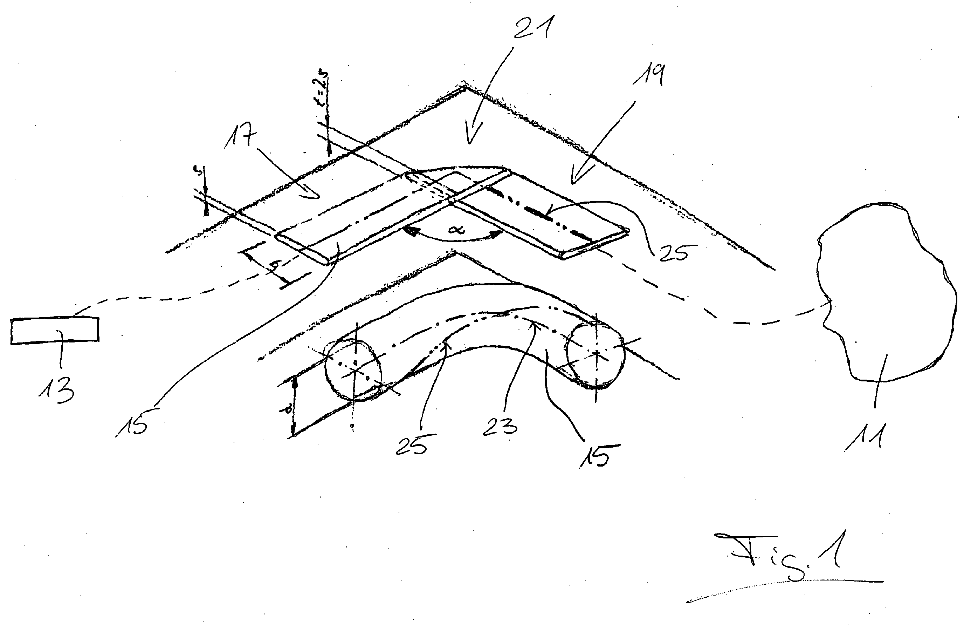

- Fig. 1 - 6: verschiedene Ausführungsformen einer erfindungsge- mäßen Umlenkfaltung, die in einer Gasleitung einer erfindungsgemäßen Luftsackanordnung für Kraftfahr- zeuge ausgebildet ist.

Die Ausführungsbeispiele in den Fig. 1 bis 6 unterscheiden sich durch die Art und Weise der Ausbildung einer Umlenkfaltung 21, die in einer Gasleitung 15 ausgebildet ist. Lediglich in Fig. 1 ist der Einfachheit halber schematisch dargestellt, dass die Gasleitung 15 einen Gasgenerator 13 und einen Luftsack 11 miteinander verbindet. In einem Crashfall wird mittels des Gasgenerators schlagartig Gas freigegeben, das unter hohem Druck in die Gasleitung 15 und über die Gasleitung 15 in den Luftsack 11 strömt, um diesen zum Schutz des oder der betreffenden Insassen eines hier nicht dargestellten Fahrzeugs aufzublasen.

In den Fig. 1 bis 6 ist jeweils in der oberen Darstellung die Gasleitung 15 in einer flachen Montagekonfiguration dargestellt, in welcher die Gasleitung als Bestandteil einer außerdem den Gasgenerator 13 und den zusammengefalteten Luftsack 11 umfassenden Luftsackanordnung in einem Fahrzeug montiert wird. Die untere Darstellung zeigt die Gasleitung 15 jeweils in einer Aufblaskonfiguration, in welcher die Gasleitung 15 mit vom Gasgenerator 13 freigegebenem Gas beaufschlagt, d.h. "aufgeblasen", ist.

In der Aufblaskonfiguration besitzt die Gasleitung 15 eine kreisförmige freie innere Querschnittsfläche mit einem Durchmesser d. Die Mittelachse 23 der aufgeblasenen Gasleitung 15 ist durch eine strichpunktierte Linie dargestellt.

In der Montagekonfiguration besitzt die flache Gasleitung 15 eine Breite b. Die Höhe oder Dicke der flachen Gasleitung 15 im Bereich eines Eintrittsabschnitts 17 und eines Austrittsabschnitts 19, auf die nachstehend näher eingegangen wird, ist mit s angegeben. In dem Ausführungsbeispiel der Fig. 1 ergibt sich die Dicke der flachen Gasleitung 15 durch die Summe der Dicken zweier die Hülle der Gasleitung 15 bildenden Materiallagen. Diese Dicke der flachen Gasleitung 15 wird im Folgenden auch als eine Höheneinheit (1s) bezeichnet.

Im Folgenden werden so genannte Umlenkfaltungen 21 erläutert, die jeweils in der flachen Gasleitung 15 ausgebildet sind, um im am Fahrzeug montierten Zustand der Luftsackanordnung das vom Gasgenerator 13 freigegebene Gas dem Luftsack 11 auf einem von einem geradlinigen Verlauf abweichenden Weg zuführen zu können. Die Umlenkfaltungen 21 sind in den Beispielen der Fig. 1 bis 6 jeweils derart ausgebildet, dass sich ein Umlenkwinkel α von 90° ergibt. Es sei an dieser Stelle betont, dass jede der hier dargestellten Umlenkfaltungen 21 ohne weiteres derart variiert werden kann, dass unter Beibehaltung der jeweiligen Faltungscharakteristik ein von 90° abweichender Umlenkwinkel α gegeben ist. Die hier dargestellten Umlenkwinkel α von 90° sind folglich jeweils lediglich als Beispiel zu verstehen.

Des Weiteren gilt für jede der hier dargestellten Umlenkfaltungen 21, dass die Funktion von Eintrittsabschnitt 17 und Austrittsabschnitt 19 auch vertauscht werden können. Die Umlenkfaltungen 21 bzw. die mit den Umlenkfaltungen 21 versehenen Gasleitungen 15 sind daher sozusagen in beiden Richtungen verwendbar. Die Umlenkfaltungen 21 sind also gewissermaßen bidirektional, d.h. die Entfaltbarkeit der Umlenkfaltungen 21 durch das vom Gasgenerator 13 freigegebene Gas ist unabhängig von der Richtung, in welcher die Umlenkfaltungen 21 jeweils durchströmt werden.

Ferner ist zu betonen, dass die Umlenkfaltungen 21 in den hier gezeigten Ausführungsformen jeweils in einem durchgehenden, d.h. in axialer Richtung betrachtet einstückigen, Abschnitt der Gasleitung 15 ausgebildet sind. Es ist also z.B. nicht so, dass freie Enden zweier Teilabschnitte der Gasleitung in wie auch immer gearteter Weise zur Bildung der Umlenkfaltung zusammengefaltet und z.B. durch Nähen oder Kleben gasdicht miteinander verbunden werden. Vielmehr stellt die Gasleitung 15 einen zumindest im Bereich der Umlenkfaltung 21 durchgehenden Schlauch dar, der zur Herstellung eines "Knicks" oder einer "Kurve", allgemein also einer Richtungsänderung, in seinem Verlauf mit einer in bestimmter Art und Wiese gebildeten Faltung versehen ist.

Gemeinsam ist den hier in den Fig. 1 bis 6 dargestellten Umlenkfaltungen 21 auch (mit Ausnahme der Variante der Fig. 3), dass das sich durch die Richtungsänderung, also durch den von 180° verschiedenen Winkel α zwischen Eintrittsabschnitt 17 und Austrittsabschnitt 19, ergebende "überschüssige" Material der Gasleitung 15 in einer geordneten Art und Weise gefaltet wird, und zwar derart, dass mehrere flache Abschnitte der Gasleitung zumindest bereichsweise übereinander liegen. Die konkrete Ausgestaltung der Umlenkfaltung 21 bestimmt die maximale Höhe oder Dicke der Gasleitung, die durch die Höhe bzw. Dicke im Bereich der Umlenkfaltung 21 gegeben ist. Diese maximale Höhe ist hier mit t bezeichnet.

Des Weiteren zeichnen sich die in den Fig. 1 bis 6 dargestellten Umlenkfaltungen 21 dadurch aus, dass die Breite der Gasleitung 15 im Bereich der Umlenkfaltung 21 nicht größer ist als die größte am Eintrittsabschnitt 17 und am Austrittsabschnitt 19 auftretende Breite. Hierdurch ergibt sich ein besonders geringer Platzbedarf für die Gasleitung 15.

Im Ausführungsbeispiel der Fig. 1 sind der Eintrittsabschnitt 17 und der Austrittsabschnitt 19 selbst nicht gefaltet, so dass die Dicke der Gasleitung 15 hier eine Höheneinheit (t = 1s) beträgt. Zur Herstellung der Umlenkfaltung 21 ist der Eintrittsabschnitt 17 einfach unter Bildung eines Umlenkwinkels von 90° über den Austrittsabschnitt 19 gefaltet. Hierdurch ergibt sich im Bereich der Umlenkfaltung 21 eine maximale Höhe der flachen Gasleitung 15 von zwei Höheneinheiten (t = 2s). Wie dem Verlauf einer durch eine zweifach strichpunktierte Linie dargestellten Mantellinie 25 an der aufgeblasenen Gasleitung 15 zu entnehmen ist, erfährt der aufgeblasene Schlauch eine Torsion um 180°, die sich über die Länge des Schlauches verteilt. Die Mantellinie 25 verläuft bei untordierter Gasleitung 15 auf der Hülle der Gasleitung 15 parallel zu deren Mittelachse 23.

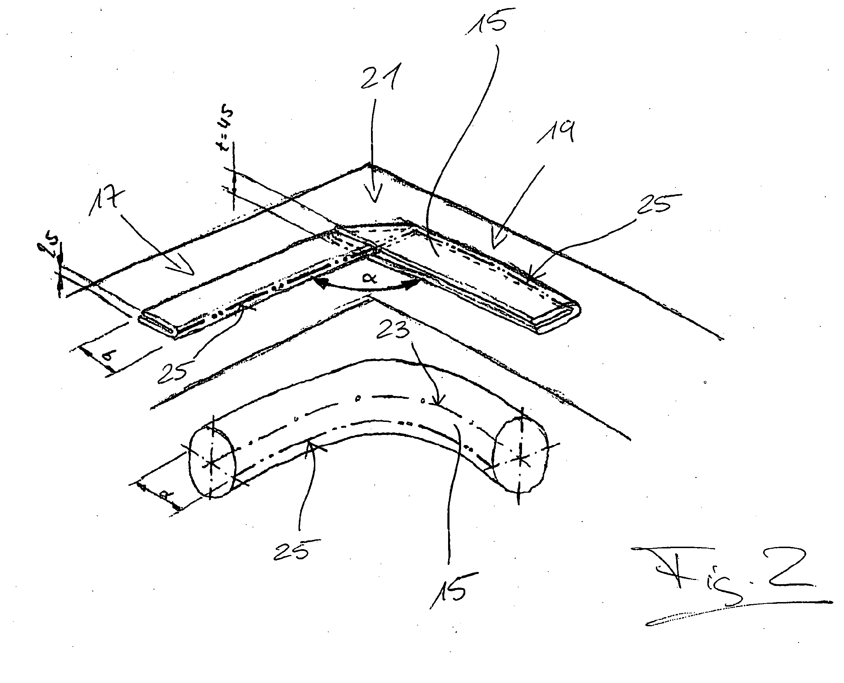

Im Ausführungsbeispiel der Fig. 2 ist der Ausgangspunkt für die Herstellung der Umlenkfaltung 21 eine flache Montagekonfiguration der Gasleitung 15, bei welcher der Eintrittsabschnitt 17 und der Austrittsabschnitt 19 jeweils selbst gefaltet sind, und zwar um die Längsachse der Gasleitung 15 derart, dass unter Halbierung der ursprünglichen Breite der flachen Gasleitung 15 eine im Querschnitt U-förmige Faltung entsteht. Die Dicke der flachen Gasleitung 15 beträgt somit sowohl im Eintrittsabschnitt 17 als auch im Austrittsabschnitt 19 zwei Höheneinheiten (2s). Der Umlenkwinkel α beträgt wiederum 90°. Aufgrund der Eigenfaltung des Eintrittsabschnitts 17 und des Austrittsabschnitts 19 der flachen Gasleitung 15 vor Ausbildung der Umlenkfaltung 21 resultiert im Bereich der Umlenkfaltung 21 eine Dicke der Gasleitung 15 von vier Höheneinheiten (t = 4s). Die Bildung der Umlenkfaltung erfolgt hier anders als in Fig. 1 nicht durch Übereinanderlegen, sondern durch Ineinanderlegen von Eintrittsabschnitt 17 und Austrittsabschnitt 19, und zwar ähnlich einer Art und Wiese, wie sie vom Falten der Nase oder des Hecks mancher Papierflieger bekannt ist. Im Bereich der Umlenkfaltung 21 liegt hier die Verlängerung des Eintrittsabschnitts 17 nicht auf oder unter, sondern innerhalb der Verlängerung des Austrittsabschnitts 19, d.h. zwischen deren beiden U-Schenkeln. Zu bemerken ist außerdem, dass die offene Seite der im Querschnitt U-förmigen Eigenfaltung beim Eintrittsabschnitt 17 nach außen und beim Austrittsabschnitt 19 nach innen weist. Wie die untere Darstellung in Fig. 2 zeigt, erfährt die aufgeblasene Gasleitung 15 bei dieser Art der Ausbildung der Umlenkfaltung 21 keine Torsion. Die Mantellinie 25 verläuft parallel zur Mittelachse 23 der aufgeblasenen Gasleitung 15.

Das Ausführungsbeispiel der Fig. 3 entspricht dem Ausführungsbeispiel der Fig. 2, was die vorstehend erläuterte Eigenfaltung des Eintrittsabschnitts 17 und des Austrittsabschnitts 19, also die Eigenfaltung der flachen Gasleitung 15 vor Ausbildung der Umlenkfaltung 21, anbetrifft. Im Unterschied zu den Ausführungsbeispielen der Fig. 1 und Fig. 2 sind hier aber der Eintrittsabschnitt 17 und der Austrittsabschnitt 19 nicht unter Herstellung des Umlenkwinkels α übereinander oder ineinander gefaltet. Vielmehr wird die flache Gasleitung 15 bei der Ausbildung des Umlenkwinkels α auf der Innenseite zunehmend zusammen geschoben, wodurch sich das Material aufstellt, wie es der oberen Darstellung in Fig. 3 zu entnehmen ist. Die Höhe dieser Materialauswölbung ist von der Ausgangsbreite b der mit der Eigenfaltung versehenen flachen Gasleitung 15 sowie von der Größe des Umlenkwinkels α abhängig. In Abhängigkeit von den Platzverhältnissen am Fahrzeug, in welchem die Gasleitung 15 verlegt werden soll, kann die erläutete Materialauswölbung so bestehen bleiben, wie es in Fig. 3 dargestellt ist. Wie im Einleitungsteil erwähnt, kann diese Materialauswölbung und damit die Umlenkfaltung 21 z.B. durch - hier nur schematisch dargestellte - Klammern oder Clipse 31 fixiert werden, die den Eintrittsabschnitt 17 und den Austrittsabschnitt 19 unmittelbar an der Umlenkfaltung zusammenhalten. Alternativ kann das aufgewölbte Material in Richtung des Eintrittsabschnitts 17 oder des Austrittsabschnitts 19 umgefaltet, also gewissermaßen "flachgedrückt", werden. Eine lösbare Fixierung der Umlenkfaltung 21 in dieser flachen Konfiguration kann z.B. durch die eingangs erwähnten Methoden erfolgen. Wie die untere Darstellung in Fig. 3 zeigt, erfährt die aufgeblasene Gasleitung 15 bei dieser Art der Umlenkfaltung 21 keine Torsion.

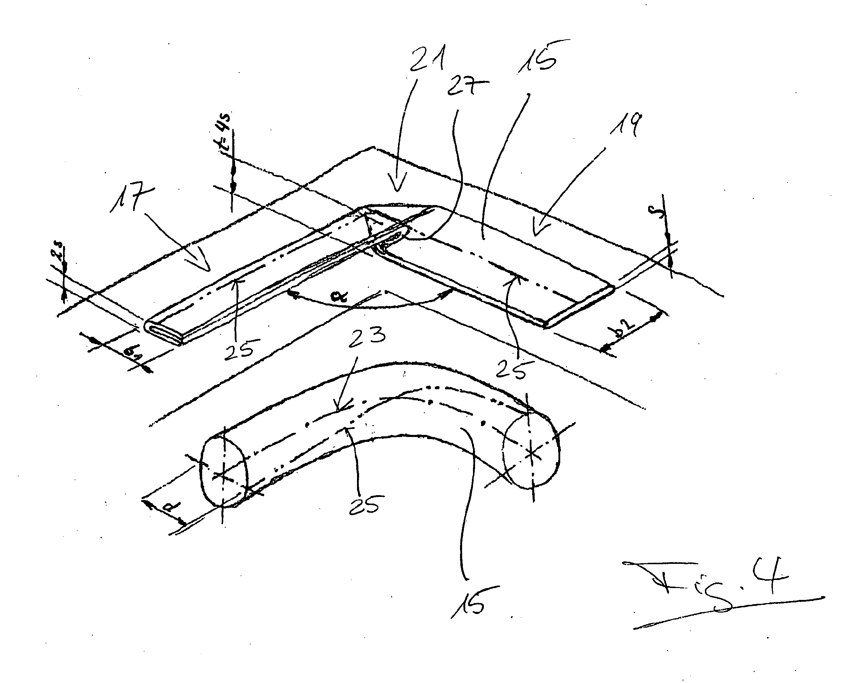

Fig. 4 zeigt eine Variante, bei der lediglich einer der sich an die Umlenkfaltung 21 anschließenden Leitungsabschnitte - hier der Eintrittsabschnitt 17 - mit einer Eigenfaltung entsprechend dem Ausführungsbeispiel der Fig. 2 oder der Fig. 3 versehen ist. Folglich besitzt der Eintrittsabschnitt 17 eine Breite b1, die halb so groß ist wie die Breite b2 des Austrittsabschnitts 19. Die Ausbildung der Umlenkfaltung 21 erfolgt prinzipiell wie in dem Ausführungsbeispiel der Fig. 1. Der mit der Eigenfaltung versehene und somit eine Dicke von zwei Höheneinheiten (2s) aufweisende Eintrittsabschnitt 17 ist unter Bildung eines Umlenkwinkels α von 90° über den nicht mit einer Eigenfaltung versehenen Austrittsabschnitt 19 gelegt. Im Unterschied zu dem Ausführungsbeispiel der Fig. 1 entsteht aufgrund der unterschiedlichen Ausgestaltung von Eintrittsabschnitt 17 und Austrittsabschnitt 19 ein zusätzlicher Materialabschnitt 27, der bei fertig gestellter Umlenkfaltung 21 zwischen dem mit der Eigenfaltung versehenen Eintrittsabschnitt 17 und dem keine Eigenfaltung aufweisenden Austrittsabschnitt 19 gelegen ist. Somit besitzt die Umlenkfaltung 21 eine maximale Dicke von vier Höheneinheiten (t = 4s). Wie die untere Darstellung in Fig. 4 zeigt, erfährt bei dieser Art und Weise der Umlenkfaltung 27 die aufgeblasene Gasleitung 15 eine Torsion um 90°, wobei sich diese Verdrehung über die Länge des von der Gasleitung 15 gebildeten Schlauches verteilt.

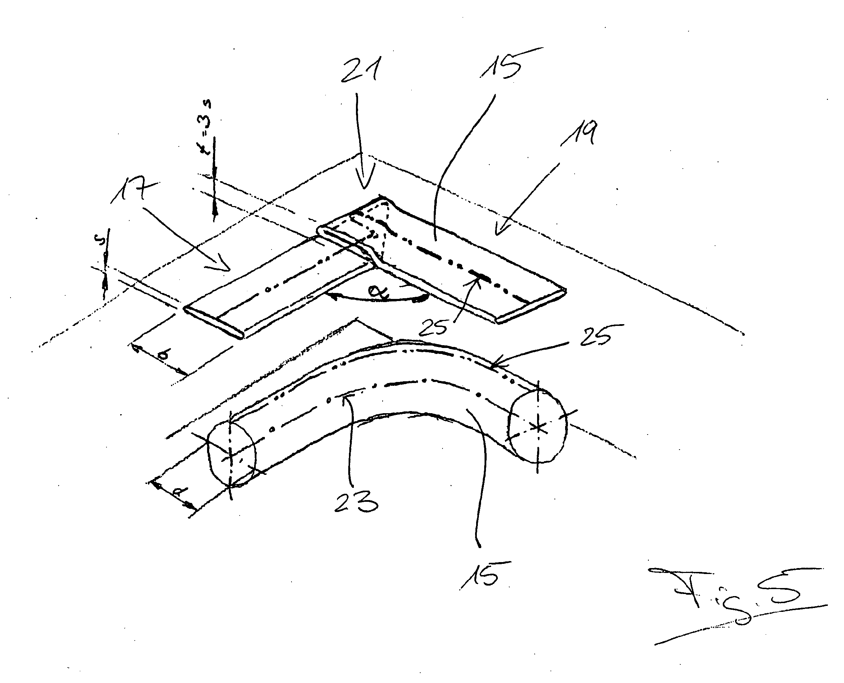

Das Ausführungsbeispiel der Fig. 5 lässt sich hinsichtlich der Ausbildung der Umlenkfaltung 21 prinzipiell auf das Ausführungsbeispiel der Fig. 3 zurückführen. Eintrittsabschnitt 17 und Austrittsabschnitt 19 weisen hier keine Eigenfaltung auf, wie sie in den Ausführungsbeispielen der Fig. 2, 3 und 4 vorgesehen sind. Der sich durch Ausbilden des Umlenkwinkels α zwischen Eintrittsabschnitt 17 und Austrittsabschnitt 19 aufstellende Materialabschnitt ist hier auf den Eintrittsabschnitt 17 gefaltet. Alternativ kann dieser Materialabschnitt auch auf den Austrittsabschnitt 19 gefaltet werden. In beiden Fällen ergibt sich eine maximale Höhe der flachen Gasleitung 15 im Bereich der Umlenkfaltung 21 von drei Höheneinheiten (t = 3s). Diese Art und Weise der Umlenkfaltung 21 führt zu keiner Verdrehung der aufgeblasenen Gasleitung 15, wie die untere Darstellung in Fig. 5 zeigt.

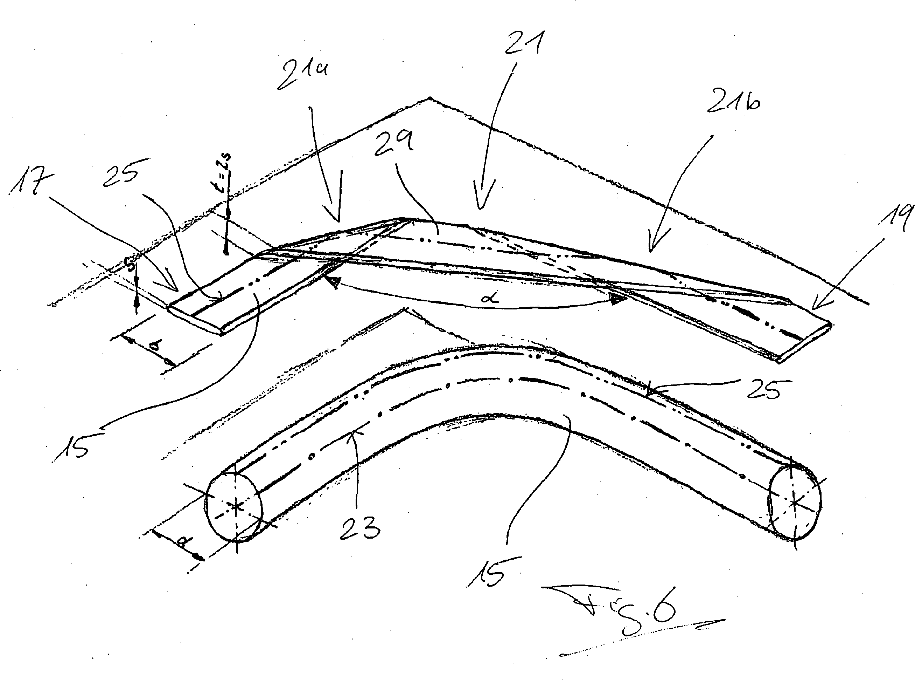

Das Ausführungsbeispiel der Fig. 6 lässt sich im Prinzip auf die Art und Weise der Faltung im Ausführungsbeispiel der Fig. 1 zurückführen. Um einen Gesamt-Umlenkwinkel von α = 90° zu realisieren, sind zwischen Eintrittsabschnitt 17 und Austrittsabschnitt 19 - anders als im Ausführungsbeispiel der Fig. 1 - nicht eine einzige Faltung, sondern zwei Teil-Faltungen 21a, 21b vorgesehen, bei denen jeweils ein Winkel von weniger als 90° und beispielsweise von 45° zwischen den jeweils beteiligten Leitungsabschnitten ausgebildet wird, wobei die beiden Winkel unterschiedlich groß sein können. Es können pro Umlenkfaltung auch mehr als zwei Teil-Faltungen vorgesehen sein. Je nach konkreter Ausgestaltung der Umlenkfaltung 21 kann diese - wie in Fig. 6 gezeigt - mit einem Zwischenabschnitt 29 zwischen den beiden Teil-Faltungen 21a, 21b versehen sein, in welchem die Dicke der flachen Gasleitung 15 wie im Eintrittsabschnitt 17 und im Austrittsabschnitt 19 lediglich eine Höheneinheit beträgt. Die maximale Dicke der flachen Gasleitung im Bereich der Umlenkfaltung 21 beträgt wiederum zwei Höheneinheiten (t = 2s). Die beiden Teil-Faltungen 21a, 21b sind gegensinnig ausgeführt. Wie die untere Darstellung in Fig. 6 zeigt, erfährt bei der hier beschriebenen Ausbildung der Umlenkfaltung 21 die aufgeblasene Gasleitung 15 keine Torsion.

### Bezugszeichenliste

- 11: Luftsack
- 13: Gasgenerator
- 15: Gasleitung
- 17: Eintrittsabschnitt
- 18: Austrittsabschnitt
- 21: Umlenkfaltung
- 21 a: Teilfaltung
- 21 b: Teilfaltung
- 23: Mittelachse
- 25: Mantellinie
- 27: zusätzlicher Materialabschnitt
- 29: Zwischenabschnitt der Umlenkfaltung
- 31: Klammer

- α: Umlenkwinkel
- b: Breite der flachen Gasleitung
- s: Dicke der flachen Gasleitung, Höheneinheit
- t: maximale Dicke der flachen Gasleitung im Bereich der Umlenkfaltung
- d: Durchmesser der aufgeblasenen Gasleitung

## Patentansprüche

1. Luftsackanordnung für Kraftfahrzeuge, mit zumindest einem aufblasbaren Luftsack (11), wenigstens einem Gasgenerator (13) zum Aufblasen des Luftsacks (11), wobei der Gasgenerator (13) zumindest im am Fahrzeug montierten Zustand entfernt von dem Luftsack (11) angeordnet ist, und zumindest einer, insbesondere schlauchartigen, Gasleitung (15), die den Gasgenerator (13) mit dem Luftsack (11) verbindet und über die der Luftsack (11) aufblasbar ist, wobei die Gasleitung (15) derart, insbesondere flexibel, biegsam und/oder weich, ausgebildet ist, dass sie unter dem Einfluss von mittels des Gasgenerators (13) freigegebenen, durch sie hindurch strömenden Gases aus einer Montagekonfiguration in eine Aufblaskonfiguration mit gegenüber der Montagekonfiguration vergrößertem Strömungsquerschnitt gelangen kann,
wobei die Gasleitung (15) in der Montagekonfiguration wenigstens eine Richtungsänderung zwischen einem einlaufenden Eintrittsabschnitt (17) und einem abgehenden, mit dem Eintrittsabschnitt (17) einen Umlenkwinkel α einschließenden Austrittsabschnitt (19) aufweist, und
**dadurch gekennzeichnet, dass** die Richtungsänderung durch eine im Verlauf der Gasleitung (15) ausgebildete Umlenkfaltung (21) der Gasleitung (15) realisiert ist.

2. Luftsackanordnung nach Anspruch 1,
**dadurch gekennzeichnet,**
**dass** die Umlenkfaltung (21) durch das mittels des Gasgenerators (13) freigegebene, durch die Gasleitung (15) hindurch strömende Gas entfaltbar ist.

3. Luftsackanordnung nach Anspruch 1 oder 2,
**dadurch gekennzeichnet,**
**dass** die Gasleitung (15) in der Montagekonfiguration flach und die Umlenkfaltung (21) ausgehend von der flachen Montagekonfiguration gebildet ist.

4. Luftsackanordnung nach einem der vorhergehenden Ansprüche,
**dadurch gekennzeichnet,**
**dass** der Eintrittsabschnitt (17) in einer flachen Montagekonfiguration in die Umlenkfaltung (21) einläuft und der Austrittsabschnitt (19) in einer flachen Montagekonfiguration von der Umlenkfaltung (21) abgeht.

5. Luftsackanordnung nach einem der vorhergehenden Ansprüche,
**dadurch gekennzeichnet,**
**dass** die Umlenkfaltung (21) eine Mehrzahl von zumindest bereichsweise übereinander liegenden flachen Leitungsabschnitten aufweist, insbesondere zwei, drei oder vier Leitungsabschnitte.

6. Luftsackanordnung nach einem der vorhergehenden Ansprüche,
**dadurch gekennzeichnet,**
**dass** zumindest im Bereich der Umlenkfaltung (21) der Eintrittsabschnitt (17) und / oder der Austrittsabschnitt (19) wenigstens einmal jeweils unter Reduzierung, insbesondere Halbierung, der Breite im Querschnitt U-förmig gefaltet sind/ist.

7. Luftsackanordnung nach einem der vorhergehenden Ansprüche,
**dadurch gekennzeichnet,**
**dass** die Umlenkfaltung (21) derart ausgebildet ist, dass die Gasleitung (15) in der Aufblaskonfiguration tordiert ist.

8. Luftsackanordnung nach einem der Ansprüche 1 bis 6,
**dadurch gekennzeichnet,**
**dass** die Umlenkfaltung (21) derart ausgebildet ist, dass die Gasleitung (15) in der Aufblaskonfiguration untordiert ist.

9. Luftsackanordnung nach einem der vorhergehenden Ansprüche,
**dadurch gekennzeichnet,**
**dass** die Umlenkfaltung (21) in einer, insbesondere flachen, Montagekonfiguration fixiert ist, insbesondere durch Verkleben, durch Vernähen, durch Um- oder Einhüllen und/oder durch Zusammenhalten der Umlenkfaltung (21) selbst und/oder des Eintrittsabschnitts (17) und des Austrittsabschnitts (19) nahe oder unmittelbar an der Umlenkfaltung (21) vorzugsweise mittels wenigstens eines insbesondere klammer- oder manschettenartigen Fixierelementes (31).

10. Luftsackanordnung nach einem der vorhergehenden Ansprüche,
**dadurch gekennzeichnet,**
**dass** die Breite der Gasleitung (15) im Bereich der Umlenkfaltung (21) höchstens so groß ist wie die größte am Eintrittsabschnitt (17) und am Austrittsabschnitt (19) auftretende Breite.

11. Luftsackanordnung nach einem der vorhergehenden Ansprüche,
**dadurch gekennzeichnet,**
**dass** die Gasleitung (15) ein Gewebe, insbesondere ein aus Kunststofffäden oder Kunststofffasern hergestelltes Gewebe, oder eine Folie umfasst.

12. Luftsackanordnung nach einem der vorhergehenden Ansprüche,
**dadurch gekennzeichnet,**
**dass** die Gasleitung (15) das gleiche oder ein gleichartiges Material umfasst wie die Hülle des Luftsacks (11).

13. Luftsackanordnung nach einem der vorhergehenden Ansprüche,
**dadurch gekennzeichnet,**
**dass** die Gasleitung (15) eine auf ein Gewebe aufgebrachte Beschichtung aufweist, wobei die Beschichtung auf der Innenseite und/oder auf der Außenseite des Gewebes vorgesehen ist.

14. Luftsackanordnung nach Anspruch 13,
**dadurch gekennzeichnet,**
**dass** für die Beschichtung das gleiche oder ein gleichartiges Material, insbesondere ein Silikonmaterial, vorgesehen ist wie für ein Klebemittel, das zum gasdichten Verschließen der Gasleitung (15) bei deren Herstellung vorgesehen ist.

## Claims

1. Air bag assembly for motor vehicles, comprising
at least an inflatable airbag (11),
at least a gas generator (13) for inflating the airbag (11), wherein the gas generator (13) is arranged remote of the airbag (11) at least in the vehicle mounted state, and at least one, in particular tubular, gas line (15) connecting the gas generator (13) with the airbag (11) and through which the airbag (11) is inflatable, wherein the gas line (15) is formed such, in particular flexible, elastic and/or soft, that, with the influence of gas released from the gas generator (13) and streaming through it, it can be brought from an assembly configuration into an inflation configuration with an enlarged flow cross-section compared to the assembly configuration,
wherein the gas line (15) in the assembly configuration comprises at least a change of direction between an incoming ingress section (17) and an outgoing discharge section (19) forming a deflection angle α with the ingress section (17), and
**characterized in that** the change of direction is realized with a deflection folding (21) of the gas line (15) formed in the course of the gas line (15).

2. Air bag assembly according to claim 1,
**characterized in that**
the deflection folding (21) is unfoldable by gas released from the gas generator (13) and streaming through the gas line (15).

3. Air bag assembly according to claim 1 or 2,
**characterized in that**
the gas line (15) is flat in the assembly configuration and the deflection folding (21) is formed on the basis of the flat assembly configuration.

4. Air bag assembly according to one of the preceding claims,
**characterized in that**
the ingress section (17) enters the deflection folding (21) in a flat assembly configuration and the discharge section (19) exits the deflection folding (21) in a flat assembly configuration.

5. Air bag assembly according to one of the preceding claims,
**characterized in that**
the deflection folding (21) comprises a plurality of flat line sections overlapping at least in certain areas, in particular two, three or four line sections.

6. Air bag assembly according to one of the preceding claims,
**characterized in that**
at least in the area of the deflection folding (21) the ingress section (17) and/or the discharge section (19) is/are each folded u-shaped in cross-section at least once with a respective reduction of the width, in particular halving.

7. Air bag assembly according to one of the preceding claims,
**characterized in that**
the deflection folding (21) is formed such that the gas line (15) is twisted in the inflation configuration.

8. Air bag assembly according to one of the claims 1 to 6,
**characterized in that**
the deflection folding (21) is formed such that the gas line (15) is untwisted in the inflation configuration.

9. Air bag assembly according to one of the preceding claims,
**characterized in that**
the deflection folding (21) is fixed in an assembly configuration, in particular flat, in particular by gluing, sewing, wrapping or enfolding and/or by fixing the deflection folding (21) itself and/or the ingress section (17) and the discharge section (19) near or directly at the deflection folding (21) preferably by means of at least one in particular clip- or sleeve-like fixing element (31).

10. Air bag assembly according to one of the preceding claims,
**characterized in that**
the width of the gas line (15) in the area of the deflection folding (21) is at the most as large as the largest width at the ingress section (17) and at the discharge section (19).

11. Air bag assembly according to one of the preceding claims,
**characterized in that**
the gas line (15) includes a fabric, in particular a fabric fabricated of plastic threads or plastic fibers, or a foil.

12. Air bag assembly according to one of the preceding claims,
**characterized in that**
the gas line (15) includes the same or a similar material as the cover of the airbag (11).

13. Air bag assembly according to one of the preceding claims,
**characterized in that**
the gas line (15) comprises a coating applied on the fabric, wherein the coating is provided on the inside and/or on the outside of the fabric.

14. Air bag assembly according to claim 13,
**characterized in that**
the same or a similar material, in particular a silicone material, is provided for the coating as well as for an adhesive, which is provided for gastight sealing of the gas line (15) at production.

## Revendications

1. Ensemble à coussin gonflable pour véhicules automobiles, comprenant
au moins un sac à gaz gonflable (11),
au moins un générateur de gaz (13) pour gonfler le sac à gaz (11), ledit générateur de gaz (13) étant agencé, au moins dans l'état monté sur le véhicule, à distance du sac à gaz (11), et
au moins une conduite à gaz (15), en particulier en forme de tuyau souple, qui relie le générateur de gaz (13) au sac à gaz (11) et au moyen de laquelle le sac à gaz (11) est gonflable, ladite conduite à gaz (15) étant réalisée, en particulier de manière flexible, souple et/ou molle, de telle manière que, sous l'influence des gaz dégagés par le générateur de gaz (13) s'écoulant à travers elle-même, elle est capable de passer d'une configuration de montage vers une configuration de gonflage avec une section d'écoulement agrandie par rapport à la configuration de montage,
dans lequel la conduite à gaz (15) comporte, dans la configuration de montage, au moins une modification de direction entre un tronçon d'entrée (13) initial et un tronçon de sortie (19) final qui définit avec le tronçon d'entrée (17) un angle de déflexion α, et
**caractérisé en ce que** la modification de direction est réalisée par un pliage de déflexion (21) de la conduite à gaz (15), réalisé dans le parcours de la conduite à gaz (15).

2. Ensemble à coussin gonflable selon la revendication 1,
**caractérisé en ce que** le pliage de déflexion (21) est dépliable au moyen des gaz dégagés par le générateur de gaz (13) et s'écoulant à travers la conduite à gaz (15).

3. Ensemble à coussin gonflable selon la revendication 1 ou 2,
**caractérisé en ce que** la conduite à gaz (15) est plane dans la configuration de montage, et le pliage de déflexion (21) est formé en partant de la configuration de montage plane.

4. Ensemble à coussin gonflable selon l'une des revendications précédentes,
**caractérisé en ce que** dans une configuration de montage plane le tronçon d'entrée (17) aboutit dans le pliage de déflexion (21), et dans une configuration de montage plane le tronçon de sortie (19) commence depuis le pliage de déflexion (21).

5. Ensemble à coussin gonflable selon l'une des revendications précédentes,
**caractérisé en ce que** le pliage de déflexion (21) comprend une pluralité de tronçons de conduite plats disposés au moins localement les uns au-dessus des autres, en particulier deux, trois ou quatre tronçons de conduite.

6. Ensemble à coussin gonflable selon l'une des revendications précédentes,
**caractérisé en ce que**, au moins dans la zone du pliage de déflexion (21), le tronçon d'entrée (17) et/ou le tronçon de sortie (19) est/sont plié(s) en forme de U en section transversale au moins une fois avec réduction respective, en particulier de la moitié, de la largeur.

7. Ensemble à coussin gonflable selon l'une des revendications précédentes,
**caractérisé en ce que** le pliage de déflexion (21) est réalisé de telle façon que la conduite à gaz (15) est tordue dans la configuration de gonflage.

8. Ensemble à coussin gonflable selon l'une des revendications 1 à 6,
**caractérisé en ce que** le pliage de déflexion (21) est réalisé de telle façon que la conduite à gaz (15) n'est pas tordue dans la configuration de gonflage.

9. Ensemble à coussin gonflable selon l'une des revendications précédentes,
**caractérisé en ce que** le pliage de déflexion (21) est fixé dans une configuration de montage, en particulier plane, en particulier par collage, par couture, par enveloppement et/ou par maintien groupé du pliage de déflexion (21) lui-même et/ou du tronçon d'entrée (17) et du tronçon de sortie (19) à proximité de ou immédiatement au niveau du pliage de déflexion (21), de préférence au moyen d'au moins un élément de fixation (31) en particulier semblable à une pince ou à une manchette.

10. Ensemble à coussin gonflable selon l'une des revendications précédentes,
**caractérisé en ce que** la largeur de la conduite à gaz (15) dans la zone du pliage de déflexion (21) est au maximum aussi élevée que la plus grande largeur qui se présente au niveau du tronçon d'entrée (17) et au niveau du tronçon de sortie (19).

11. Ensemble à coussin gonflable selon l'une des revendications précédentes,
**caractérisé en ce que** la conduite à gaz (15) comprend un textile, en particulier un textile réalisé en fils synthétiques ou en fibres synthétiques, ou un film.

12. Ensemble à coussin gonflable selon l'une des revendications précédentes,
**caractérisé en ce que** la conduite à gaz (15) comprend le même matériau ou un matériau analogue à la celui de l'enveloppe du sac à gaz (11).

13. Ensemble à coussin gonflable selon l'une des revendications précédentes,
**caractérisé en ce que** la conduite à gaz (15) comporte un revêtement appliqué sur un textile, ledit revêtement étant prévu sur la face intérieure et/ou sur la face extérieure du textile.

14. Ensemble à coussin gonflable selon la revendication 13,
**caractérisé en ce qu'**il est prévu pour le revêtement le même matériau ou un matériau analogue, en particulier un matériau au silicone, à celui d'un matériau adhésif qui est prévu pour assurer une obturation étanche aux gaz de la conduite à gaz (15) lors de sa fabrication.
